# EUROPÄISCHE PATENTSCHRIFT

(11) **EP 1 871 640 B1**
(45) Veröffentlichungstag und Bekanntmachung des Hinweises auf die Patenterteilung: **28.09.2011**
(21) Anmeldenummer: 06724161.2
(22) Anmeldetag: 08.04.2006
(51) Int. Cl.: B60N 2/66, A47C 7/46

(54) **FAHRZEUGSITZ MIT LORDOSENSTÜTZE**
VEHICLE SEAT WITH LORDOSIS SUPPORT
SIEGE DE VEHICULE EQUIPE D'UN APPUI LOMBAIRE

(30) Priorität: 08.04.2005 US 101827; 05.08.2005 DE 102005036936
(43) Veröffentlichungstag der Anmeldung: 02.01.2008
(73) Patentinhaber: Alfmeier Präzision AG Baugruppen und Systemlösungen, 91757 Treuchtlingen (DE)
(72) Erfinder: SCHÄFER, Rolf, 91725 Ehingen (DE); AEUGLE, Torsten, 91801 Markt Berolzheim (DE); MASSARA, Andrew, Birmingham, MI 48009 (US); HOFMOCKEL, Jürgen, 91522 Ansbach (DE); HOFSCHULTE, Wolfram-H., 79848 Bonndorf (DE); KNÖPFLE, Urban, 79822 Titisee-Neustadt (DE); WÖHRLE, Michael, 78078 Niedereschach (DE)
(74) Vertreter: Höfner, Gerhard
(86) Internationale Anmeldenummer: PCT/EP2006/003224
(87) Internationale Veröffentlichungsnummer: WO 2006/105989

(56) Entgegenhaltungen:
- EP-A- 0 540 481
- EP-A- 0 552 904
- WO-A-03/095262
- US-A- 6 145 925
- US-A1- 2004 245 811
- US-B1- 6 601 919

## Beschreibung

Die Erfindung betrifft einen Fahrzeugsitz mit Lordosenstütze. Eine Lordosenstütze ist eine in der Sitzlehne nahe der Fläche angeordnete Einrichtung, mit welcher die Lehnenkontur im Lordosenbereich des Benutzers veränderbar ist. Vielfach werden dazu unterhalb der Aufpolsterung der Sitzlehne angeordnete Blasen verwendet, die zur Sitzkonturverstellung be- bzw. entlüftet werden. Daneben existieren auch mechanische Lösungen, d.h. solche, bei denen die Sitzkonturverstellung auf rein mechanischem Weg erfolgt, wie bei den in US 6,601,919 B1, US 5,474,358, US 6,767,214 B2, US 6,814,407 B2 und US 6,652,028 B2 offenbarten Fahrzeugsitzen. Die bekannten Fahrzeugsitze weisen im Lordosenbereich ein hinter der Lehnenpolsterung angeordnetes Stützelement auf. Dieses wird durch eine motorisch angetriebene Einrichtung, die meist einem Bowdenzug zu Hilfe nimmt, in Sitzquer- oder in Sitzlängsrichtung gekrümmt. Dadurch wird die ursprüngliche Sitzkontur, also jene im nicht vorgewölbten Zustand, relativ stark verändert, was oft nicht erwünscht ist. Nachteilig ist weiter, dass das Stützelement infolge seiner Krümmung eine Relativbewegung zur Polsterung ausführt, wie etwa im Falle von US 6,814,407 B2. Bei dem dort beschriebenen Fahrzeugsitz erstreckt sich ein Stützelement in Sitzquerrichtung. Die Vorwölbung wird dadurch erreicht, dass die Enden des Stützelements mittels eines Bowdenzugs einander angenähert werden und dadurch zwangsläufig eine Relativbewegung gegenüber der Polsterung der Sitzlehne ausführen.

Ein gattungsgemäßer Fahrzeugsitz mit Lordosenstütze ist aus dem Dokument WO-A-03/095262 bekannt. Aufgabe der Erfindung ist es, einen Fahrzeugsitz mit Lordosenstütze vorzuschlagen, bei welchem eine Sitzkonturverstellung im Lordosenbereich unter Umgehung der genannten Nachteile auf eine alternative Art und Weise erfolgt.

Diese Aufgabe wird durch einen Fahrzeugsitz nach Anspruch 1 gelöst. Die Lordosenstütze umfasst danach eine im Wesentlichen in Sitzquerrichtung biegesteife Druckplatte, die eine Stützfläche im Lordosenbereich der Lehne bildet und die zwischen zwei seitlichen Rahmenteilen des Sitzrahmens angeordnet ist, wobei mindestens ein Halteelement vorhanden ist, das sich mit einem in Y-Richtung verlaufenden und die Druckplatte tragenden längenvariablen Verstellabschnitt zwischen den Rahmenteilen erstreckt und dort an sich gegenüberliegenden Fixierstellen fixiert ist. Die Druckplatte ist in einer Ruhestellung mit Horizontalabstand hinter den Fixierstellen angeordnet, wobei eine Antriebseinrichtung vorhanden ist, mit der die Länge des Verstellabschnitts unter Verringerung des Horizontalabstands verkürzbar ist. Durch die Verkürzung des Verstellabschnitts wird die Druckplatte nach vorne bewegt, wodurch sie das Lehnenpolster vorwölbt. Aufgrund der Steifigkeit der Sitzplatte bleibt dabei die Kontur des Lordosenbereichs der Sitzlehne in Sitzquerrichtung im Wesentlichen erhalten. Bei z.B. aus US 6,676,214 B2 bekannten Sitzen dagegen ist das die Vorwölbung bewirkende Element flexibel, so dass sich die Kontur des Lordosenbereichs der Lehne abhängig vom Grad der Vorwölbung verändert. Das wenigstens eine-Halteelement verläuft vorzugsweise an der Rückseite der Druckplatte, wodurch sich diese bei Belastung des Sitzes durch einen Benutzer sicher am Halteelement abstützen kann. Außerdem ist durch die genannte Anordnung eine Relativbewegung zwischen der Bepolsterung der Sitzlehne und dem sich verkürzenden oder in seine Ausgangslage zurück bewegenden Halteelement vermieden.

Dadurch, dass erfindungsgemäß zwei in Vertikalrichtung voneinander beabstandete Halteelemente vorgesehen sind, kann neben einer Vorwölbung des Lordosenbereiches auch eine Bewegung einer Vorwölbung in Vertikalrichtung, also von unten nach oben und umgekehrt erzielt werden. Bei Lordosenstützen mit einer derartigen Beweglichkeit spricht man auch von einer 4-Wege-Lordosenstütze. Die vertikale Bewegung der Lehnenvorwölbung im Lordosenbereich erfolgt auf einfache Weise dadurch, dass die Halteelemente unabhängig voneinander verkürzt und zeitversetzt angesteuert werden.

Bei einer besonders bevorzugten Ausgestaltung umfasst ein Halteelement zwei Federelemente mit jeweils einem ersten und einem zweiten Ende, wobei jeweils das erste Ende an einem seitlichen Rahmenteil fixiert ist und die zweiten Enden über ein Verbindungselement miteinander verbunden sind, dessen Länge mit Hilfe einer Antriebseinrichtung reduzierbar ist. Bei einer Reduzierung der Länge des Verbindungselements wird der Verstellbereich des Halteelements verkürzt und dementsprechend die Druckplatte nach vorne bewegt.

Das Verbindungselement ist bei einer ersten bevorzugten Variante ein aus Innenkabel und Hülle gebildeter Bowdenzug. Dabei stützt sich die Hülle an dem zweiten Ende des einen Federelements ab, wobei das Ende eines aus der Hülle herausragenden Abschnitts des Innenkabels am zweiten Ende des anderen Federelements fixiert ist. Auf diese technisch einfach zu realisierende Art und Weise lassen sich somit die zweiten Enden der Federelemente einander annähern bzw. der sich zwischen den seitlichen Rahmenteilen der Sitzlehne erstreckende Verstellabschnitt des Halteelements verkürzen.

Bei einer zweiten bevorzugten Variante ist das Verbindungselement im Wesentlichen von einem motorgetriebenen Spannschloss gebildet, dessen Enden mit den Schraubenzugfedern verbunden sind. Insbesondere in montagetechnischer Hinsicht ist es vorteilhaft, wenn mindestens eine aus Spannschloss und Motor bestehende Einheit in einem gemeinsamen, an der Rückseite der Druckplatte fixierten Gehäuse angeordnet ist.

Zur Fixierung der Druckplatte an dem Halteelement ist vorgesehen, dass auf der Rückseite der Druckplatte eine sich wenigstens über eine Teilbreite der Druckplatte erstreckende Aufnahme vorhanden ist, in der das Innenkabel des Bowdenzugs im Wesentlichen spielfrei geführt ist. Dadurch, ist verhindert, dass das Innenkabel während des Fahrzeugbetriebs zu Schwingungen angeregt wird, was zu Klappergeräuschen führen kann.

Der sich im Lordosenbereich der Sitzlehne vorwölbende Bereich erstreckt sich nicht über die gesamte Lehnenbreite sondern ist auf einem mittleren Lehnenbereich beschränkt. Dementsprechend füllt die Druckplatte nicht den gesamten in Fahrzeugquerrichtung zwischen den seitlichen Rahmenteilen vorhanden Raum aus, sondern zwischen Druckplatte und den genannten Rahmenteilen ist ein Zwischenraum vorhanden. Wie oben schon erwähnt, ist die Druckplatte mit den Federelementen an den seitlichen Rahmenteilen aufgehängt. Wenn es sich, wie vorzugsweise vorgesehen, bei den Federelementen um Schraubenzugfedern handelt, besteht die Gefahr einer störenden Wechselwirkung zwischen den in Sitzquerrichtung arbeitenden Federelementen und dem Polstermaterial. Um dies zu vermeiden sind an den Seitenrändern der Druckplatte Fortsätze angebracht, welche sich in Sitzquerrichtung erstrecken und die Federelemente zumindest teilweise überdecken.

Bei einer Verkürzung des Verstellabschnitts des Halteelements wird die Druckplatte nach vorne bewegt, wodurch der Winkel, den die sich zwischen den seitlichen Rahmenteilen und den Seitenrändern der Druckplatte erstreckenden Haltelementabschnitte, also insbesondere die Federelemente mit der Planebene der Druckplatte einschließen, vergrößert. Um die unterschiedliche Winkelstellung der genannten Halteelementabschnitte während des Vor- und Rückhubs der Druckplatte im Wesentlichen behinderungsfrei zu ermöglichen, sind die Fortsätze derart an der Druckplatte so angelenkt, dass ihre Winkelstellung zur Planebene der Druckplatte veränderbar ist. Dies wird beispielsweise dadurch gewährleistet, dass die Fortsätze insgesamt flexibel sind oder dass nur die Verbindung zwischen den Fortsätzen und der Druckplatte flexibel ausgestaltet ist. Denkbar ist beispielsweise, dass die Fortsätze über ein Foliengelenk, also einem verdünnten Materialbereich an die Druckplatte angeformt sind. Eine gegenseitige Verbindung der Fortsätze und der Federelemente, insbesondere solchen die als Schraubenzugfedern ausgebildet sind, wird dadurch gewährleistet, dass die Fortsätze an ihrer Rückseite eine Aufnahme aufweisen, in der ein Federelement mit einem nur in Fahrzeuglängsrichtung wirksamen Formschluss einliegt. Dadurch ist eine Bewegungskopplung zwischen Federelement und Fortsatz bei einem Vor- bzw. Rückhub der Druckplatte gewährleistet, ohne dass dadurch die relative Beweglichkeit zwischen Fortsatz und Federelement in Sitzquerrichtung beeinträchtigt ist.

In dem oberhalb der Druckplatte befindlichen Bereich der Sitzlehne ist am Rahmen eine weitere Platte fixiert, die als Auflage der Sitzlehnenbepolsterung dient, die Platte wird daher im Folgenden als Auflageplatte bezeichnet. Es ist zwar denkbar, dass die Auflageplatte ein von der Druckplatte unabhängiges separates Teil ist. Vorzugsweise ist jedoch vorgesehen, dass die Auflageplatte mit dem oberen Rand der Druckplatte verbunden ist. Auf diese Weise wird die Stabilität der gesamten Sitzlehnenstruktur erhöht, wobei eine federnde Halterung dadurch gewährleistet ist, dass die Auflageplatte mit Federelementen, insbesondere mit Schraubenzugfedern, an den seitlichen Rahmenteilen fixiert ist. Um trotz der Verbindung der beiden Platten eine im Wesentlichen unabhängige Verstellung der Druckplatte zu gewährleisten, ist bei einer bevorzugten Ausgestaltung die Auflageplatte an der Druckplatte angelenkt, beispielsweise über ein Scharniergelenk mit dieser verbunden. Alternativ oder zusätzlich zu dieser Ausgestaltung ist die Auflageplatte in Vertikalrichtung, beispielsweise mit Hilfe von Durchbrechungen oder aufgrund einer entsprechenden Materialstärke in gewissem Ausmaß flexibel ausgebildet.

Bei einer weiteren bevorzugten Ausgestaltung ist an der Rückseite der Druckplatte und/oder der Auflageplatte wenigsten ein Lüfter angeordnet, dessen Ausströmöffnung die Auflageplatte bzw. die Druckplatte durchsetzt. Auf diese Weise kann durch Einblasen von Kalt- bzw. Warmluft eine Kühlung oder Erwärmung der Sitzlehne insbesondere im Lordosenbereich erfolgen.

Eine Antriebseinrichtung für ein Halteelement, also in der Regel ein gegebenenfalls mit Getriebe ausgerüsteter Elektromotor lässt sich an den seitlichen Rahmenteilen befestigen. Bei einer bevorzugten Ausgestaltung ist der Antrieb jedoch an der Rückseite der Druckplatte oder der Auflageplatte angeordnet. Dies hat den Vorteil, dass eine Druckplatte mit sämtlichen erforderlichen Bauteilen wie Halteelement, Federelementen, Anlageplatte und Antriebseinrichtung als komplette Baugruppe vorgefertigt werden kann, so dass bei der Sitzmontage diese Baugruppe im Wesentlichen nur noch in den Lehnenrahmen eingehängt werden muss. Gleiches gilt insbesondere bei der weiter oben schon beschriebenen Variante, bei der Spannschloss und Motor in einem gemeinsamen, an der Rückseite der Druckplatte fixierten Gehäuse untergebracht sind.

Die Erfindung wird nun unter Bezugnahme auf die beigefügten Zeichnungen näher erläutert. Es zeigen:
- Fig. 1: eine Draufsicht von der Vorderseite her auf ein Lehnengestell eines Fahrzeugsitzes mit darin eingehängter Lordosenstütze,
- Fig. 2: die Lordosenstütze von Fig. 1,
- Fig. 3: eine Seitenansicht der Lordosenstütze von Fig. 2,
- Fig. 4: ein Detail aus Fig. 2 in perspektivischer Darstellung,
- Fig. 5: die Lordosenstütze von Fig. 2 von der Rückseite her betrachtet,
- Fig. 6: eine Lordosenstütze in einer Fig. 2 entsprechenden Abbildung, bei welcher eine Verstellung mit Hilfe nur eines Motors erfolgt,
- Fig. 7: eine Seitenansicht der Lordosenstütze von Fig. 6.
- Fig. 8: eine Lordosenstütze entsprechend Fig. 6, bei der in der Auflageplatte und der Druckplatte Lüfter angeordnet sind,
- Fig. 9: eine Lordosenstütze entsprechend Fig. 2, bei der Druckplatte und Auflageplatte einstückig miteinander verbunden sind,
- Fig. 10: eine Lordosenstütze entsprechend Fig. 9, bei der in der Druckplatte und in der Auflageplatte Lüfter angeordnet sind.
- Fig. 11: eine Lordosenstütze, bei der eine Verstellung mit Hilfe gegenläufiger Spindelgetriebe erfolgt,
- Fig. 12: ein Detail aus Fig. 11.

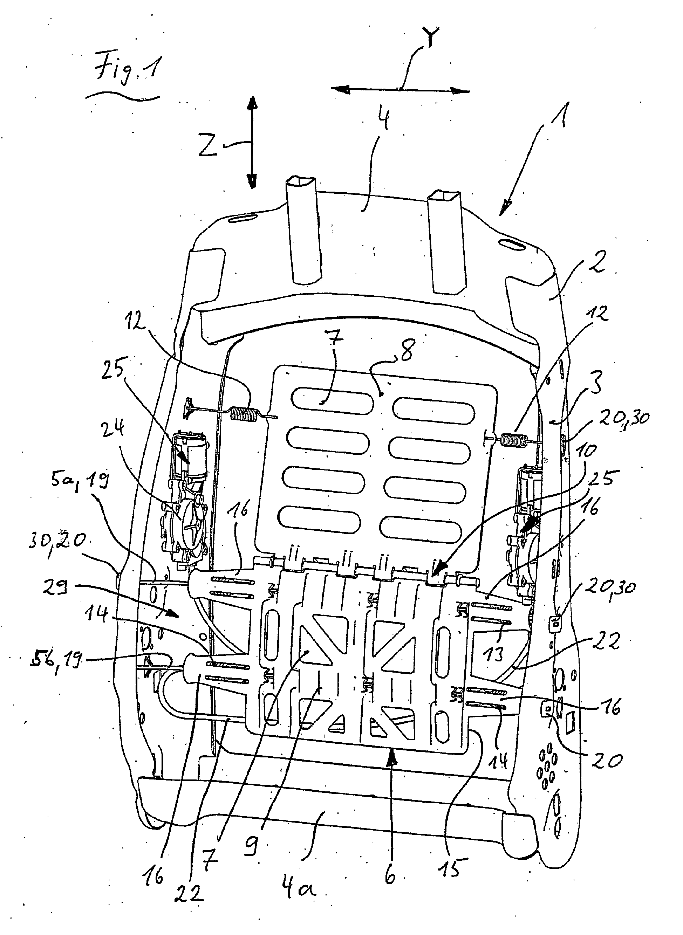

Fig. 1 zeigt das Lehnengestell 1 eines Fahrzeugsitzes, das im wesentlichen von einem geschlossenen Rahmen aus Kunststoff oder Metall gebildet ist. Der Rahmen setzt sich zusammen aus zwei seitlichen Rahmenteilen 3, sowie einer oberen und einer unteren Traverse 4,4a. Die Lordosenstütze 6 selbst ist im wesentlichen aus zwei etwa plattenförmigen, mit Durchbrechungen 7 versehenen Teilen, nämlich einer Auflageplatte 8 und einer Druckplatte 9 gebildet. Die Auflageplatte 8 ist mit der Druckplatte 9 über ein Scharniergelenk 10 verbunden. Die Auflageplatte ist mit je einer Schraubenzugfeder 12 in ein seitliches Rahmenteil 3 eingehängt. Zur verstellbaren Halterung der Druckplatte 9 sind zwei vertikal voneinander beabstandete Halteelemente 5a, 5b vorhanden. Diese umfassen jeweils zwei etwa schraubenförmig gewundene Schraubenzugfedern 13,14. Mit diesen ist die Druckplatte 9 an den seitlichen Rahmenteilen 3 fixiert. Zwischen den Seitenrändern der Druckplatte 9 und den seitlichen Rahmenteilen 3 ist ein Zwischenraum 29 vorhanden, durch den sich die Schraubenzugfedern 13,14 hindurch erstrecken. An den Seitenrändern der Druckplatte 9 sind Fortsätze 16 angebracht, welche sich in Sitzquer- bzw. in Y-Richtung erstrecken und die Schraubenzugfedern 13,14 zumindest teilweise überdecken. Die Fortsätze 16 sind derart an der Druckplatte 9 angelenkt, dass ihre Winkelstellung zur Planebene der Druckplatte veränderbar ist, was durch eine Schwächungsstelle bzw. durch ein Folienscharnier (nicht gezeigt) bewerkstelligt ist. An ihrer Rückseite weisen die Fortsätze 16 eine Aufnahme 17 auf, in der die Schraubenzugfedern 13,14 mit einem hauptsächlich in Fahrzeuglängs- bzw. X-Richtung wirksamen Formschluss einliegen. Dadurch ist verhindert, dass die Schraubenzugfedern 13, 14 von einem Benutzer als störende Druckstellen wahrgenommen werden oder mit Polstermaterial in eine störende Wechselwirkung gelangen. Außerdem dient die in Rede stehende Ausgestaltung auch zur Fixierung der Druckplatte 9 im Lehnenrahmen, wodurch Erschütterungen und Vibrationen verhindert sind. Die Aufnahme 17 erstreckt sich etwa in Y-Richtung und ist von zwei zum Einsetzen einer Schraubenzugfeder 13, 14 aufweitbaren Federzungen 18 umgrenzt.

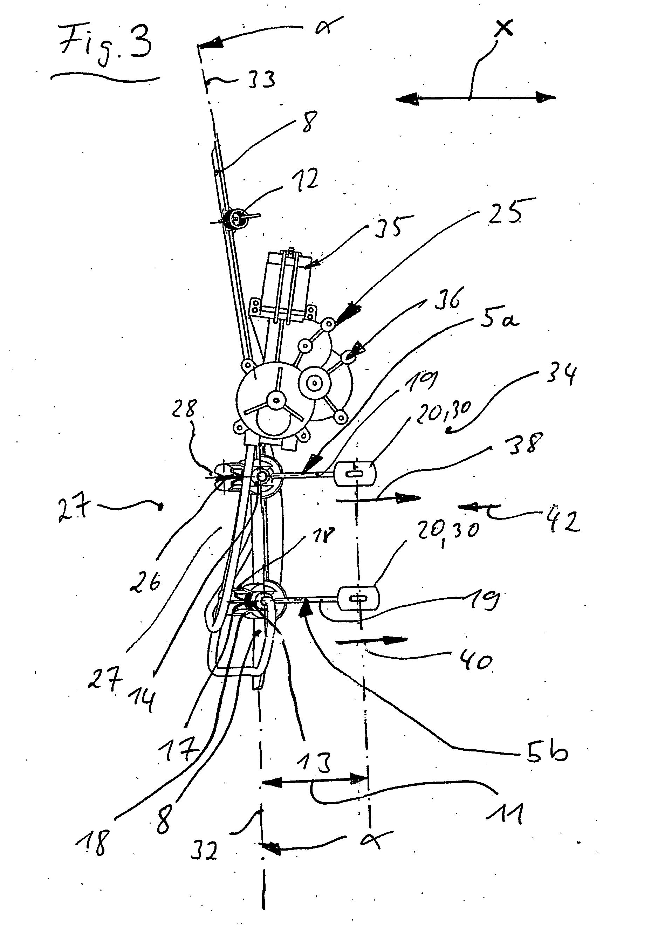

Das von der Druckplatte 9 wegweisende Federende 19 der Schraubenzugfedern 13,14 erstreckt sich im wesentlichen geradlinig ) von den Schraubenzugfedern weg und ist mit einem Clips 20 in einer Öffnung eines Rahmenteils 3 fixiert. Im entspannten Zustand der Schraubenzugfedern bzw. in einer Ruhestellung der Druckplatte erstrecken sich die Federenden 19 im Bezug auf die Y-Richtung schräg nach vorne, schließen also mit der Y-Richtung eines sich nach vorne öffnenden Winkel ein, wie am Besten aus Fig. 3 ersichtlich ist. Die Druckplatte 9 befindet sich dabei in einer Ruhestellung, in der ein zwischen ihr und den Fixierstellen 30 (Clips 20) der Federenden 19 an den seitlichen Rahmenteilen 3 vorhandener Horizontalabstand 11 maximal ist. Dieser wird verringert und dadurch die Druckplatte 9 nach vorne bewegt, wenn der sich zwischen den Fixierstellen 30 erstreckende Verstellbereich 21 verkürzt. Bei den in den Abbildungen gezeigten Ausführungsbeispielen wird dies bewerkstelligt, indem die aufeinander zu weisenden Federenden 19a einander genähert werden. Dazu sind sie mit einem Verbindungselement verbunden, welches mit Hilfe eines motorischen Antriebs verkürzbar ist.

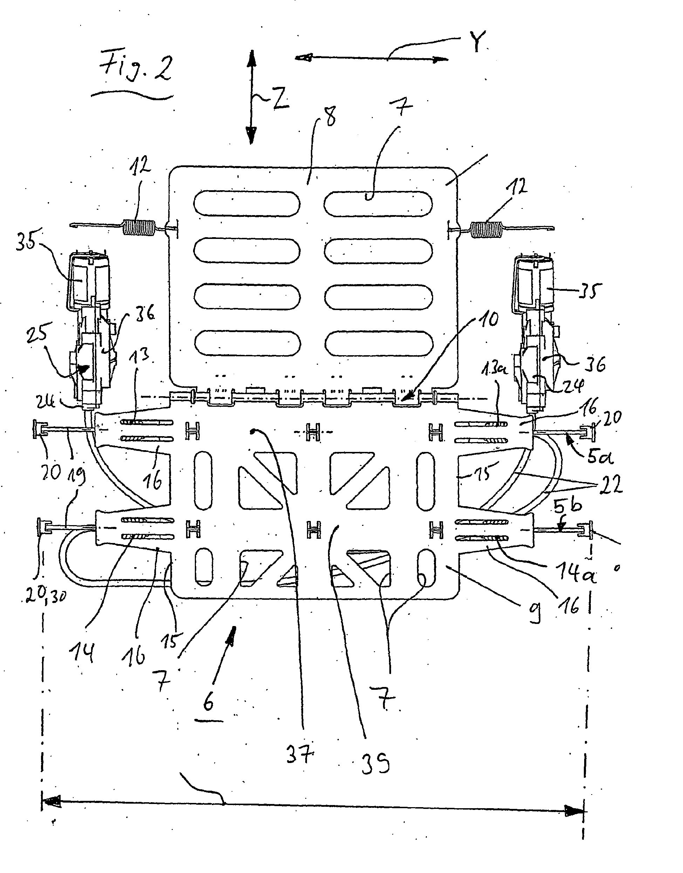

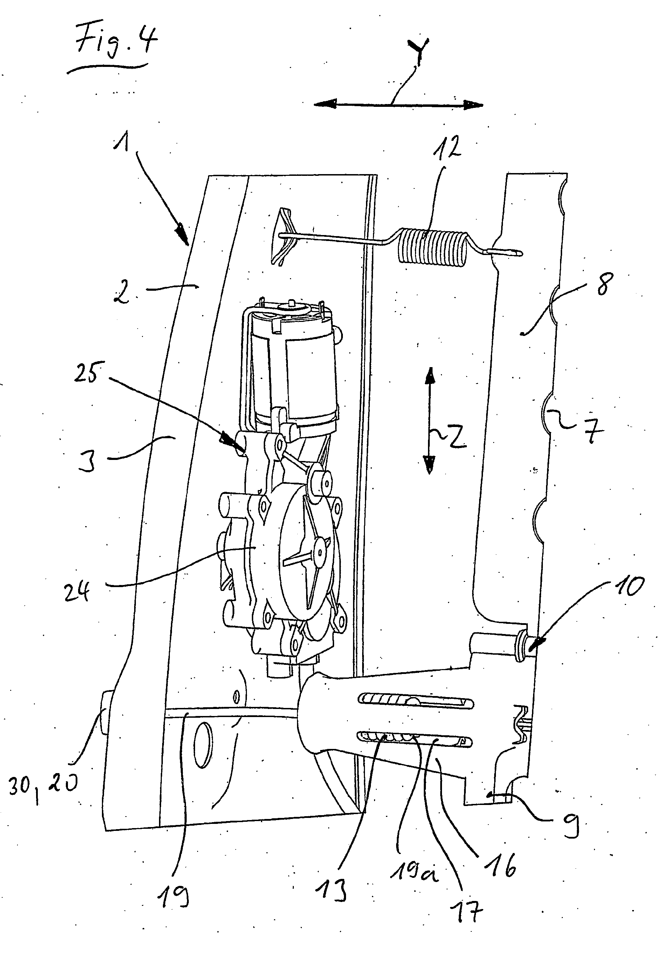

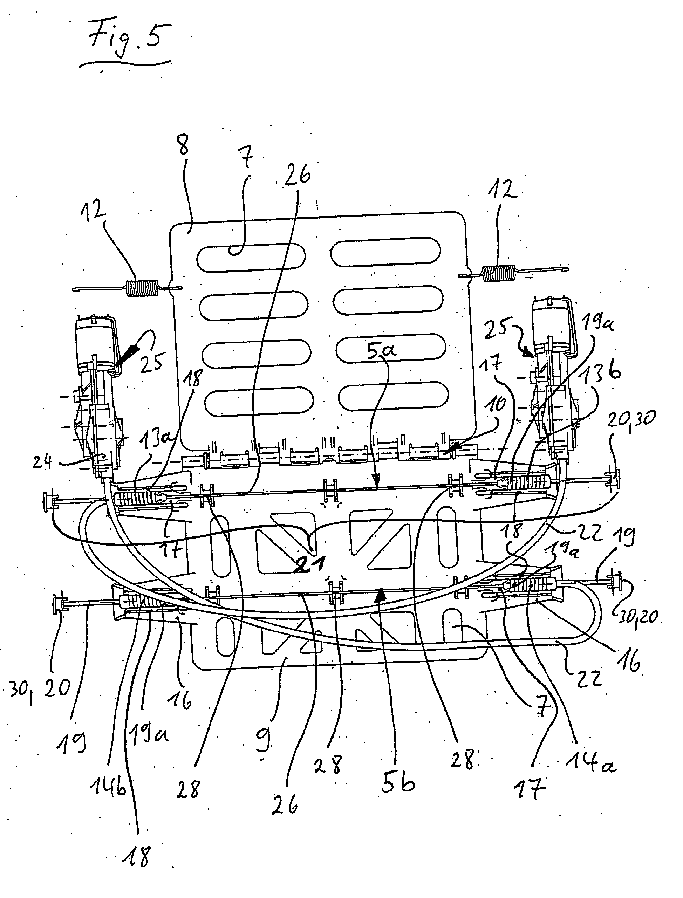

Bei den in Fig. 1 bis 10 gezeigten Ausführungsbeispielen ist das Verbindungselement ein Bowdenzug 22, der zwei sich gegenüberliegende Schräubenzugfedern 13 bzw. 14 miteinander verbindet. Die Hülle 23 des Bowdenzuges 22 stützt sich einerseits an dem Gehäuse 24 einer an einem Rahmenteil 3 angeordneten elektrischen Antriebseinheit 25 und andererseits an einer sich an das Federende 19 anschließenden Federwindung einer Schraubenzugfeder 13a,14a (Fig. 5) ab. Der Innenzug 26 des Bowdenzuges 22 erstreckt sich über die Rückseite 27 der Druckplatte 9 hinweg bis zur jeweils gegenüberliegenden Schraubenzugfeder 13b bzw. 14b. An der Rückseite 27 der Druckplatte liegt der Innenzug 26 in wenigstens einer Aufnahmenut 28 ein.

Im entspannten Zustand der Schraubenzugfedern befindet sich die Druckplatte 9 in einer zurückgezogenen Position, wobei der Horizontalabstand 11 (Fig. 3) am größten ist. Die Planebene 32 (Fig. 3) der Druckplatte 9 bildet dabei mit der Planebene 33 der Auflageplatte 8 einen zur Vorderseite des Lehnengestells 1 geöffneten stumpfen Winkel α. Zur Verstellung der Druckplatte 9 aus dieser Position dienen die bereits erwähnten elektrischen Antriebseinheiten 25. Diese setzen sich aus einem Elektromotor 35 und einem Getriebe 36 zusammen. Das Getriebe 36 umfasst eine Rolle (nicht sichtbar) zum Aufwinden des Innenzugs 26.

Bei dem in Fig. 1 bis 5 dargestellten Ausführungsbeispiel mit zwei Antriebseinheiten 25 ergeben sich folgende Verstellmöglichkeiten. Wird im Falle des oberen Halteelements 5a der Innenzug 26 in die Hülle 23 des Bowdenzugs 22 hineingezogen, verkürzt sich dessen sich zwischen den Schraubenzugfedern 13 erstreckender Bereich. Als Folge davon wird der obere Bereich 37 der Druckplatte 9 entsprechend Pfeil 38 in Fig. 3 nach vorne geschwenkt, wobei das untere Halteelement 5b eine Schwenkachse bildet. Aufgrund des Scharniergelenks 10 zwischen Druckplatte 9 und Auflageplatte 8 wird letztere in Richtung des Pfeils 38 geringfügig nach vorne geschwenkt, wobei die Schraubenfedern 12 als Schwenkachse dienen. Wird auf die beschriebene Art und Weise das untere Halteelement 5b verkürzt, bewegt sich der untere Bereich 39 der Druckplatte 9 auf analoge Weise in Richtung des Pfeils 40 nach vorne. Der obere Bereich 37 und der untere Bereich 39 können auch gemeinsam in Richtung der Pfeile 38,40 oder zeitversetzt nach vorne bewegt werden, um beispielsweise eine Massagefunktion mit Hilfe eines Steuergerätes zu realisieren. In allen den genannten Fällen erfolgt eine Zurückstellung der Druckplatte 9 dadurch, dass bei umgekehrter Drehrichtung des Motors 35 bzw. des Getriebes 36 der Innenzug 26 durch die sich entspannenden Schraubenzugfedern 13,14 aus der Hülle 23 herausgezogen wird. Die Druckplatte 9 wird durch das Gewicht eines Sitzbenutzers in ihre Ruhestellung bewegt. Neben den erwähnten Bewegungsmöglichkeiten kann der obere Bereich 37 umgekehrt betätigt werden wie der untere Bereich 39, etwa derart, dass sich der untere Bereich in Pfeilrichtung 40 nach vorne und der obere Bereich sich in Richtung des Pfeils 42 nach hinten bewegt und umgekehrt. Dadurch können sich von oben nach unten oder sich von unten nach oben bewegende Druckzonen bzw. Druckwellen erzeugt werden.

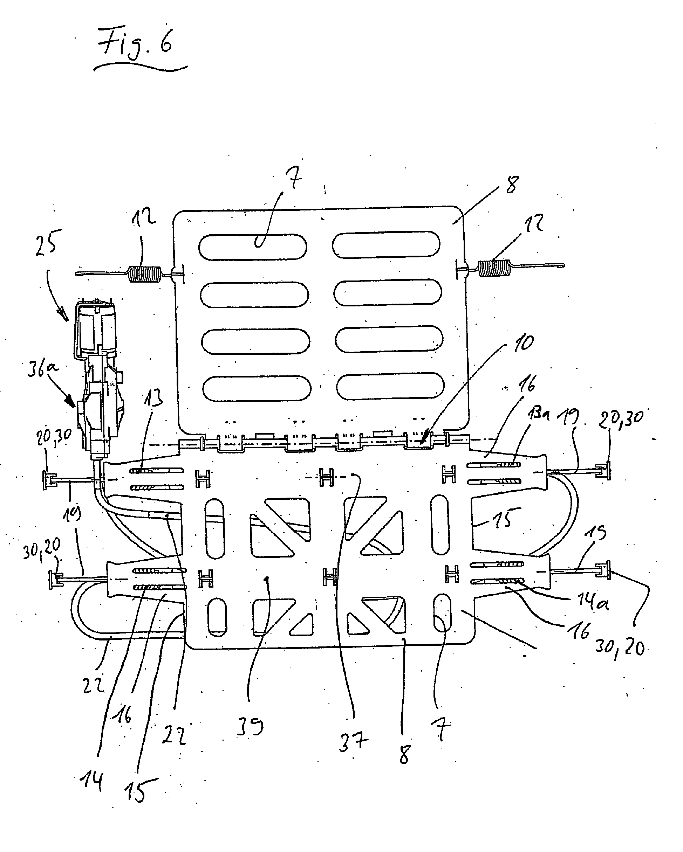

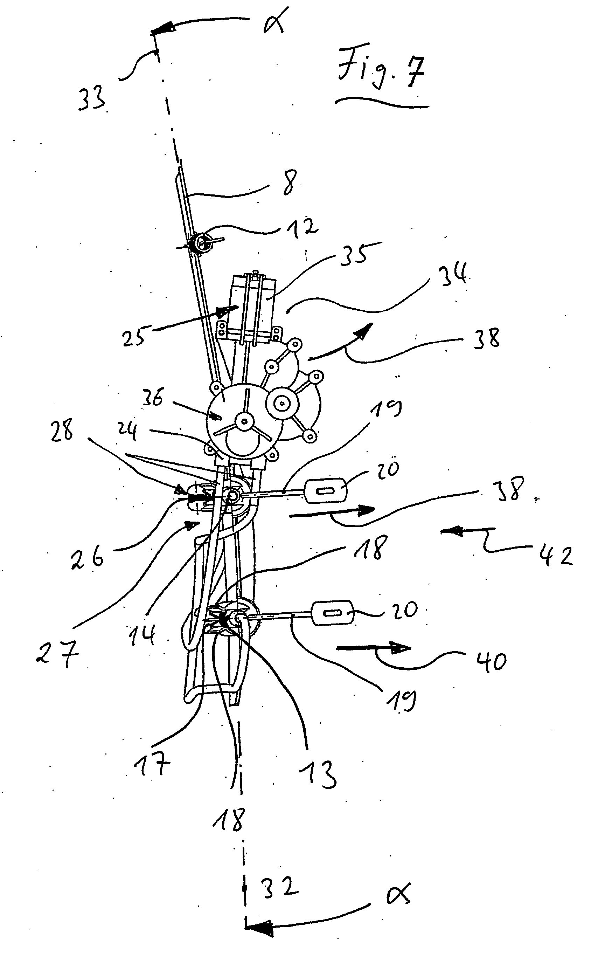

Bei dem in Fig. 6,7 gezeigten Ausführungsbeispiel ist nur eine Antriebseinheit 25 vorhanden. Deren Getriebe 36a ist so gestaltet, dass es die Innenzüge 26 zweier Bowdenzüge 22 gleichzeitig aufnehmen und mit umgekehrten Windungsrichtungen auf eine Spule aufrollen kann. Eine Verstellung erfolgt ausgehend von einer Mittelposition, bei der beide Schraubenzugfedernpaare 13 bzw. 14 teilweise gespannt sind. Mit dieser Ausführungsform ist ein gleichzeitiges vor- oder zurückbewegen des oberen Bereiches 37 und des unteren Bereiches 39 nicht möglich. Die genannten Bereiche können aber abwechselnd nach vorne bewegt werden.

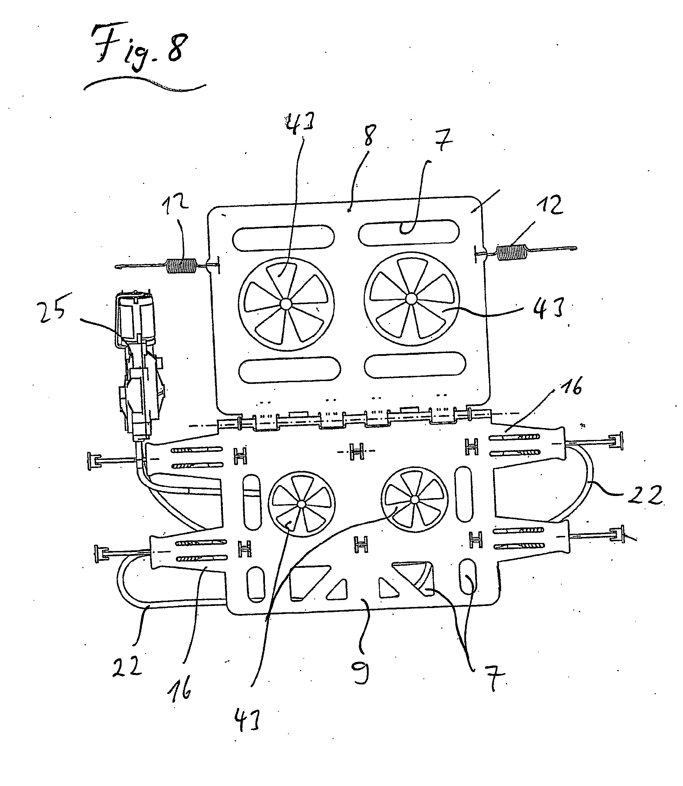

In Fig. 8 ist ein Ausführungsbeispiel dargestellt, bei dem in der Auflageplatte 8 und in der Druckplatte 9 Lüfter 43 angeordnet sind. Durch diese Ausgestaltung kann durch einen vor der Lordosenstütze angeordneten Polsterbereich Luft hindurch gesaugt oder hindurchgedrückt und damit dieser Bereich gekühlt werden.

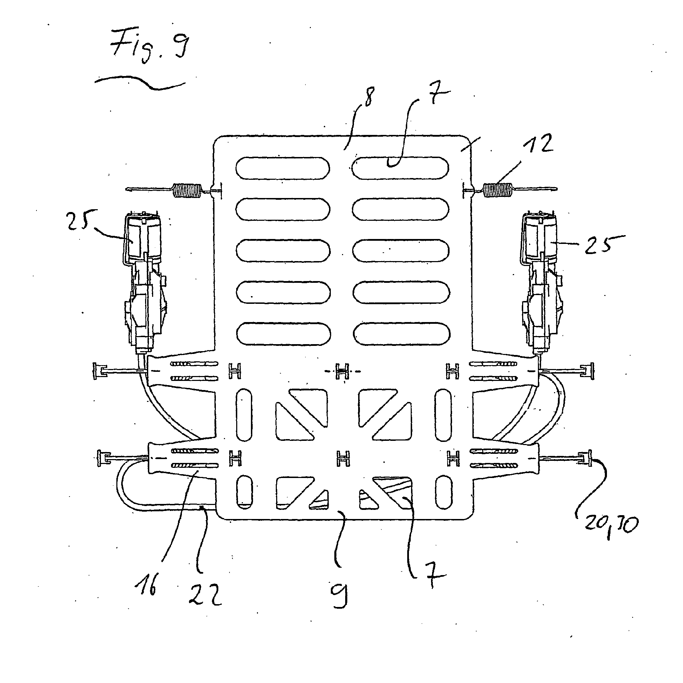

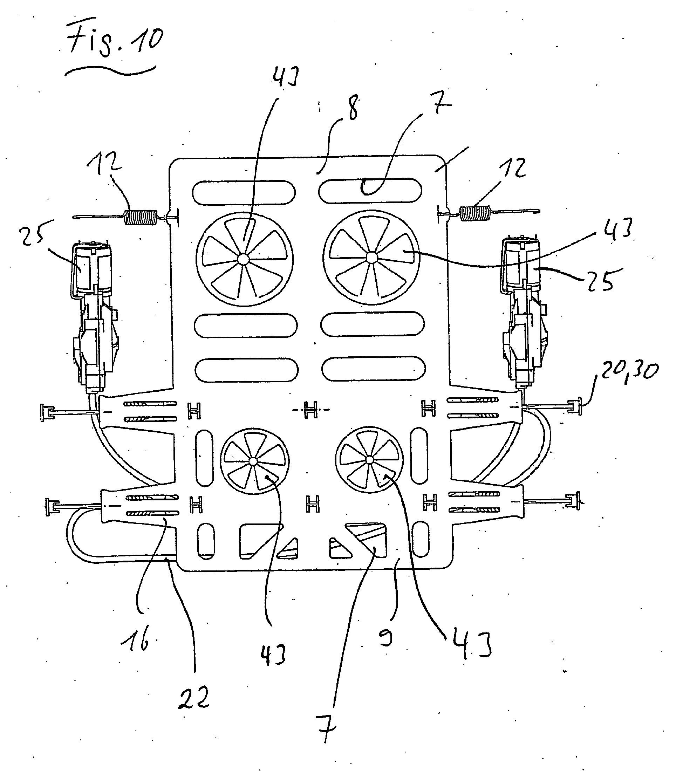

In Fig. 9 ist ein Ausführungsbeispiel gezeigt, bei dem die Auflageplatte 8 einstückig mit der Druckplatte 9 verbunden ist. Auch hier können, wie Fig. 10 zu entnehmen ist, in der Auflageplatte 8 und in der Druckplatte 9 Lüfter 43 vorhanden sein. Denkbar ist natürlich auch, dass die Lüfter 43 nur in einer Druckplatte 9 oder nur in einer Auflageplatte 8 vorhanden sind. Anstelle von Lüftern können auch sonstige Bauteile an der Druckplatte 9 und/oder der Auflageplatte 8 fixiert werden, beispielsweise Schaltgeräte, Polsterbefestigungen etc.

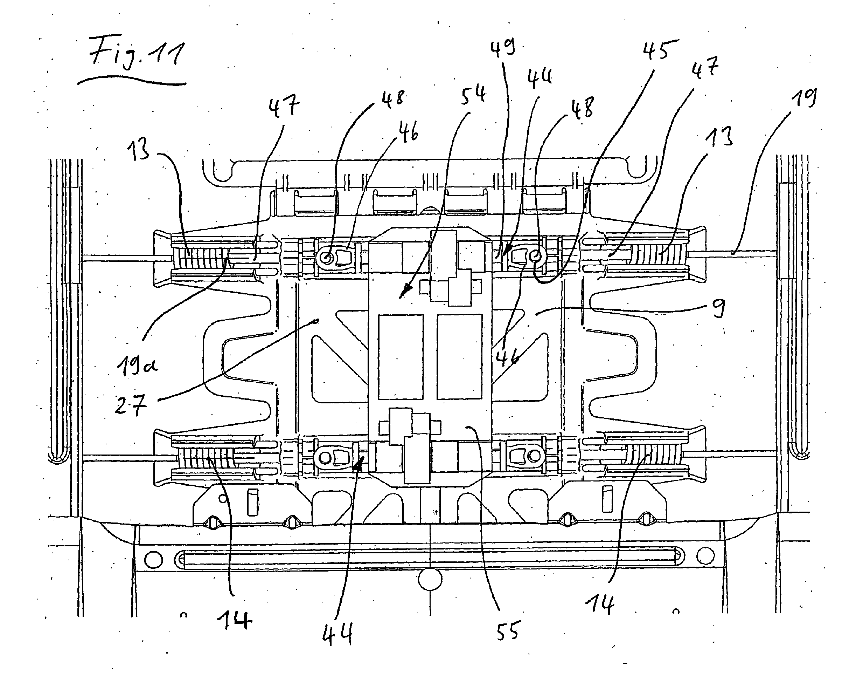

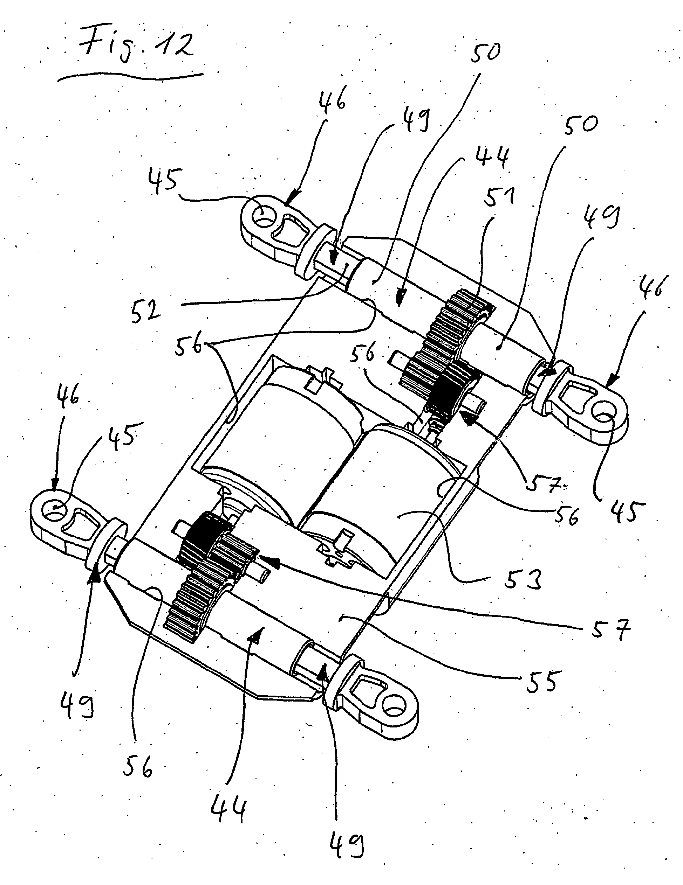

Bei dem ausschnittsweise in Fig. 11 gezeigten Ausführungsbeispiel werden die Enden 19a der Schraubenzugfedern 13,14 zur Verstellung der Druckplatte 9 jeweils mit Hilfe eines Spannschlosses 44 aufeinander zu bewegt. Ein Spannschloss 44 weist zwei jeweils mit einer Öse 45 versehene Enden 46 auf. Zwischen den Enden 46 und den Federn 13 erstreckt sich jeweils ein Verbindungsstück 47, welches an seinem einen Ende einen in eine Öse 45 eingreifenden Vorsprung 48 aufweist und dessen anderes Ende mit einer Schraubenzugfeder 13,14 verbunden ist. Wie Fig. 12 zu entnehmen ist, wird ein Spannschloss im Wesentlichen aus zwei, jeweils ein Ende 46 aufweisenden Spindeln 49 und zwei Hülsen 50 gebildet. Diese weisen jeweils ein Innengewinde (nicht sichtbar) auf, das mit den Gewinden der Spindeln 49 zusammenwirkt Die beiden Hülsen 50 sind drehmomentschlüssig aneinander fixiert. Eine der beiden Hülsen 50 weist ein Zahnrad 51 auf, mit dem beide Hülsen 50 rotierend antreibbar sind. Die jeweiligen Gewinde der Spindeln 49 und Hülsen 50 sind gegensinnig, so dass bei einer Rotation des Zahnrades 51 die Enden 46 sich entweder voneinander weg oder aufeinander zu bewegen. An den Spindeln 49 sind Abflachungen 52 vorhanden, welche der Drehfixierung der Spindeln 49 dienen. Bei dem Ausführungsbeispiel von Fig. 11 umfasst jedes Halteelement 5a,5b ein Spannschloss 44. Die beiden Spannschlösser sind zusammen mit jeweils einem zugeordneten Elektromotor 53 in einem gemeinsamen Gehäuse 54 untergebracht, das an der Rückseite der Druckplatte 9 fixiert ist. Das Gehäuse 54 ist aus zwei Gehäuseschalen 55 gebildet, welche Ausnehmungen 56 zur Aufnahme der Elektromotoren 53 und der Spannschlösser 44 aufweisen. Die Elektromotoren 53 sind jeweils über ein Getriebe 57 mit dem Zahnrad 51 eines Spannschlosses 44 verbunden, wobei die Getriebe 57 ebenfalls in Ausnehmungen 56 der Gehäuseschalen 55 angeordnet sind.

### Bezugszeichenliste

- 1: Lehnengestell
- 2: Rahmen
- 3: Rahmenteil
- 4: Traverse
- 5: Halteelement
- 6: Lordosenstütze
- 7: Durchbrechung
- 8: Auflageplatte
- 9: Druckplatte
- 10: Scharniergelenk
- 11: Horizontalabstand
- 12: Schraubenzugfeder
- 13: Schraubenzugfeder
- 14: Schraubenzugfeder
- 15: Seitenrand
- 16: Fortsatz
- 17: Aufnahme
- 18: Federzungen
- 19: erstes Federende
- 19a: zweites Federende
- 20: Clips
- 21: Verstellbereich
- 22: Bowdenzug
- 23: Hülle
- 24: Gehäuse
- 25: Antriebseinrichtung
- 26: Innenzug
- 27: Rückseite
- 28: Aufnahmenut
- 29: Zwischenraum
- 32: Planebene
- 33: Planebene
- 34: Vorderseite
- 35: E-Motor
- 36: Getriebe
- 37: oberer Bereich
- 38: Pfeil
- 39: unterer Bereich
- 40: Pfeil
- 42: Pfeil
- 43: Lüfter
- 44: Spannschloss
- 45: Öse
- 46: Ende
- 47: Verbindungsstück
- 48: Vorsprung
- 49: Spindel
- 50: Hülse
- 51: Zahnrad
- 52: Abflachung
- 53: Elektromotor
- 54: Gehäuse
- 55: Gehäuseschale
- 56: Ausnehmung
- 57: Getriebe

## Patentansprüche

1. Fahrzeugsitz mit einer einen Rahmen (2) aufweisenden Lehne und einer Lordosenstütze (6), mit folgender weiterer Ausgestaltung:
- die Lordosenstütze (6) umfasst eine im wesentlichen zumindest in Sitzquerrichtung bzw. in Y-Richtung biegesteife Druckplatte (9), die eine Stützfläche im Lordosenbereich der Lehne bildet und die zwischen zwei seitlichen Rahmenteilen (3) des Rahmens (2) angeordnet ist,
- es sind zwei in Vertikal- bzw. in Z-Richtung voneinander beabstandete Halteelemente (5a,5b) vorhanden, die sich jeweils mit einem in Y-Richtung verlaufenden und mit der Druckplatte (9) verbundenen längenvariablen Verstellbereich (21) zwischen den seitlichen Rahmenteilen (3) erstrecken und dort an sich gegenüberliegenden Fixierstellen (30) fixiert sind,
- in einer Ruhestellung ist die Druckplatte (9) mit Horizontalabstand (11) bzw. Abstand in X-Richtung hinter den Fixierstellen (30) angeordnet,
- es ist eine Antriebseinrichtung vorhanden, mit der die Länge des Verstellabschnitts unter Verringerung des Horizontalabstands verkürzbar ist,
**dadurch gekennzeichnet,**
**dass** an den Seitenrändern der Druckplatte (9) Fortsätze (16) angebracht sind, welche sich in Y-Richtung erstrecken und die Federelemente zumindest teilweise überdecken.

2. Fahrzeugsitz nach Anspruch 1,
**dadurch gekennzeichnet,**
**dass** die Fortsätze (16) derart an der Druckplatte (1) angelenkt sind, dass ihre Winkelstellung zur Planebene (32) der Druckplatte (9) veränderbar ist.

3. Fahrzeugsitz nach Anspruch 1 oder 2,
**dadurch gekennzeichnet,**
**dass** die Fortsätze (16) an ihrer Rückseite eine Aufnahme (17) aufweisen, in der das Federelement mit einem in Fahrzeuglängsrichtung wirksamen Formschluss einliegt.

4. Fahrzeugsitz nach einem der vorhergehenden Ansprüche,
**dadurch gekennzeichnet,**
**dass** das Halteelement (5a,5b) an der Rückseite der Druckplatte (9) angeordnet ist.

5. Fahrzeugsitz nach einem der vorhergehenden Ansprüche,
**dadurch gekennzeichnet,**
**dass** die Längen der Verstellbereiche (21) unabhängig voneinander variierbar sind.

6. Fahrzeugsitz nach einem der vorhergehenden Ansprüche,
**dadurch gekennzeichnet,**
**dass** ein Halteelement (5a,5b) wenigstens ein vorzugsweise als Schraubenzugfeder (13,14) ausgebildetes Federelement aufweist.

7. Fahrzeugsitz nach Anspruch 6,
**dadurch gekennzeichnet,**
**dass** ein Halteelement (5a,5b) zwei jeweils ein erstes Ende und ein zweites Ende (19,19a) aufweisende Federelemente umfasst, wobei jeweils das erste Ende (11) an einem seitlichen Rahmenteil (3) fixiert ist und wobei die zweiten Enden (19a) über ein Verbindungselement miteinander verbunden sind, dessen Länge mit Hilfe einer Antriebseinrichtung (25) reduzierbar ist.

8. Fahrzeugsitz nach Anspruch 7,
**dadurch gekennzeichnet,**
**dass** das Verbindungselement ein aus Innenzug (26) und Hülle (23) gebildeter Bowdenzug (22) ist.

9. Fahrzeugsitz nach Anspruch 8,
**dadurch gekennzeichnet,**
**dass** sich die Hülle (23) an dem zweiten Ende (19a) des einen Federelements (13a,14a) abstützt und das Ende eines aus der Hülle (23) heraus ragenden Abschnitts des Innenzugs (26) am zweiten Ende (19a) des anderen Federelements (13b,14b) fixiert ist.

10. Fahrzeugsitz nach Anspruch 8 oder 9,
**dadurch gekennzeichnet,**
**dass** an der Rückseite (27) der Druckplatte (9) eine sich wenigstens über eine Teilbreite der Druckplatte erstreckende Aufnahmenut (28) vorhanden ist, in der der Innenzug (26) des Bowdenzugs im Wesentlichen spielfrei geführt ist.

11. Fahrzeugsitz nach Anspruch 7,
**dadurch gekennzeichnet,**
**dass** das Verbindungselement ein motorgetriebenes Spannschloss (44) ist, dessen Enden (46) mit den Schraubenzugfedern (13, 14) verbunden sind.

12. Fahrzeugsitz nach Anspruch 11,
**dadurch gekennzeichnet,**
**dass** mindestens eine aus Spannschloss (44), Getriebe (57) und Elektromotor (53) bestehende Einheit in einem gemeinsamen, an der Rückseite (27) der Druckplatte (9) fixierten Gehäuse (54) angeordnet ist.

13. Fahrzeugsitz nach einem der vorhergehenden Ansprüche,
**dadurch gekennzeichnet,**
**dass** jedem Halteelement (5a,5b) eine separat ansteuerbare Antriebseinrichtung (25) zugeordnet ist.

14. Fahrzeugsitz nach einem der vorhergehenden Ansprüche,
**dadurch gekennzeichnet,**
**dass** mit dem oberen Rand der Druckplatte eine weitere Platte, nämlich eine Auflageplatte (8), verbunden ist.

15. Fahrzeugsitz nach Anspruch 14,
**dadurch gekennzeichnet,**
**dass** die Auflageplatte (8) mit Federelementen an den seitlichen Rahmenteilen fixiert ist.

16. Fahrzeugsitz nach Anspruch 14 oder 15,
**dadurch gekennzeichnet,**
**dass** die Auflageplatte (8) an der Druckplatte (9) angelenkt ist.

17. Fahrzeugsitz nach Anspruch 16, 17 oder 18,
**dadurch gekennzeichnet,**
**dass** die Auflagefläche (8) in Vertikalrichtung flexibel ist.

18. Fahrzeugsitz nach einem der vorhergehenden Ansprüche,
**dadurch gekennzeichnet,**
**dass** an der Rückseite (27) der Druckplatte (9) und/oder der Auflageplatte (8) ein Lüfter (43) angeordnet ist, dessen Ausströmöffnung die Auflageplatte (8) bzw. die Druckplatte (9) durchsetzt.

## Claims

1. Vehicle seat with a backrest, which has a frame (2), and with a lordosis support (6), having the following further configuration:
- the lordosis support (6) comprises a pressure plate (9) which is substantially flexurally rigid at least in the transverse direction of the seat or in the Y direction, forms a supporting surface in the lordosis region of the backrest and is arranged between two lateral frame parts (3) of the frame (2),
- there are two holding elements (5a, 5b) which are spaced apart from each other in the vertical direction or in the Z direction, which each extend by means of a length-variable adjustment region (21), which runs in the Y direction and is connected to the pressure plate (9), between the lateral frame parts (3) and are fixed there at opposite fixing points (30),
- in an inoperative position, the pressure plate (9) is arranged behind the fixing points (30) at a horizontal distance (11) or distance in the X direction,
- there is a driving device with which the length of the adjustment section can be shortened by reducing the horizontal distance,
**characterized in that** extensions (16) which extend in the Y direction and at least partially cover the spring elements are attached to the side edges of the pressure plate (9).

2. Vehicle seat according to Claim 1, **characterized in that** the extensions (16) are coupled to the pressure plate (9) in such a manner that the angular position of said extension can be changed with respect to the plane (32) of the pressure plate (9).

3. Vehicle seat according to Claim 1 or 2, **characterized in that** the extensions (16) have, on the rear side thereof, a receptacle (17) in which the spring element lies with a form-fitting connection which is effective in the longitudinal direction of the vehicle.

4. Vehicle seat according to one of the preceding claims, **characterized in that** the holding element (5a, 5b) is arranged on the rear side of the pressure plate (9).

5. Vehicle seat according to one of the preceding claims, **characterized in that** the lengths of the adjustment regions (21) can be varied independently of one another.

6. Vehicle seat according to one of the preceding claims, **characterized in that** a holding element (5a, 5b) has at least one spring element which is preferably designed as a helical tension spring (13, 14).

7. Vehicle seat according to Claim 6, **characterized in that** a holding element (5a, 5b) comprises two spring elements each having a first end and a second end (19, 19a), the first end (11) in each case being fixed to a lateral frame part (3), and the second ends (19a) being connected to each other via a connecting element, the length of which can be reduced with the aid of a driving device (25).

8. Vehicle seat according to Claim 7, **characterized in that** the connecting element is a Bowden cable (22) formed from an inner cable (26) and a sheath (23).

9. Vehicle seat according to Claim 8, **characterized in that** the sheath (23) is supported on the second end (19a) of one spring element (13a, 14a) and the end of a portion of the inner cable (26), which portion protrudes out of the sheath (23), is fixed to the second end (19a) of the other spring element (13b, 14b).

10. Vehicle seat according to Claim 8 or 9, **characterized in that** the rear side (27) of the pressure plate (9) is provided with a receiving groove (28) which extends at least over a partial width of the pressure plate and in which the inner cable (26) of the Bowden cable is guided in a substantially play-free manner.

11. Vehicle seat according to Claim 7, **characterized in that** the connecting element is a motor-driven turnbuckle (44), the ends (46) of which are connected to the helical tension springs (13, 14).

12. vehicle seat according to Claim 11, **characterized in that** at least one unit consisting of a turnbuckle (44), gearing (57) and electric motor (53) is arranged in a common housing (54) fixed on the rear side (27) of the pressure plate (9).

13. Vehicle seat according to one of the preceding claims, **characterized in that** each holding element (5a, 5b) is assigned a separately activatable driving device (25).

14. Vehicle seat according to one of the preceding claims, **characterized in that** a further plate, namely a bearing plate (8), is connected to the upper edge of the pressure plate.

15. Vehicle seat according to Claim 14, **characterized in that** the bearing plate (8) is fixed by spring elements to the lateral frame parts.

16. Vehicle seat according to Claim 14 and 15, **characterized in that** the bearing plate (8) is coupled to the pressure plate (9).

17. Vehicle seat according to Claim 16, 17 or 18, **characterized in that** the bearing surface (8) is flexible in the vertical direction.

18. Vehicle seat according to one of the preceding claims, **characterized in that** a fan (43) is arranged on the rear side (27) of the pressure plate (9) and/or of the bearing plate (8), the discharge opening of which fan passes through the bearing surface (8) and/or the pressure plate (9).

## Revendications

1. Siège de véhicule comprenant un appui (6) lombaire et un dossier comportant un cadre (2), ayant la conformation supplémentaire suivante :
- l'appui (6) lombaire comprend une plaque (9) d'appui rigide en flexion au moins sensiblement dans une direction transversale du siège ou dans la direction Y, qui forme une surface d'appui dans la zone lombaire du dossier et qui est disposée entre deux parties (3) latérales du cadre (2),
- il y a deux éléments (5a, 5b) de maintien à distance l'un de l'autre dans la direction verticale ou dans la direction Z, qui s'étendent entre les parties (3) latérales du cadre en ayant respectivement une zone (21) de réglage variable en longueur, s'étendant dans la direction Y et reliée à la plaque (9) d'appui et qui y sont immobilisés sur des points (30) d'immobilisation opposés,
- dans une position de repos, la plaque (9) d'appui est disposée à distance (11) horizontale ou à distance dans la direction X derrière les points (9) d'immobilisation,
- il y a un dispositif d'entraînement, par lequel la longueur de la section de réglage peut être raccourcie en diminuant la distance horizontale,
**caractérisé**
**en ce que** sur les bords latéraux de la plaque (9) d'appui sont mis des prolongements (16) qui s'étendent dans la direction Y et qui recouvrent au moins en partie des éléments à ressort.

2. Siège de véhicule suivant la revendication 1,
**caractérisé**
**en ce que** les prolongements (16) sont articulés à la plaque (1) d'appui de manière à ce que leur position angulaire par rapport au plan (32) de la plaque (9) d'appui puisse être modifiée.

3. Siège de véhicule suivant la revendication 1 ou 2,
**caractérisé**
**en ce que** les prolongements (16) ont sur leur face arrière un logement (17) dans lequel l'élément à ressort est inséré par une complémentarité de forme efficace dans la direction longitudinale du véhicule.

4. Siège de véhicule suivant l'une des revendications précédentes,
**caractérisé**
**en ce que** l'élément (5a, 5b) de maintien est disposé sur la face arrière de la plaque (9) d'appui.

5. Siège de véhicule suivant l'une des revendications précédentes,
**caractérisé**
**en ce que** les longueurs des zones (21) de réglage peuvent être modifiées indépendamment l'une de l'autre.

6. Siège de véhicule suivant l'une des revendications précédentes,
**caractérisé**
**en ce qu'**un élément (5a, 5b) de maintien comporte au moins un élément à ressort, constitué de préférence sous la forme d'un ressort (13, 14) de traction hélicoïdale.

7. Siège de véhicule suivant la revendication 6,
**caractérisé**
**en ce qu'**un élément (5a, 5b) de maintien comprend deux éléments à ressort ayant respectivement une première extrémité et une deuxième extrémité (19, 19a), respectivement la première extrémité (11) étant immobilisée sur une partie (3) latérale du cadre et les deuxièmes extrémités (19a) étant reliées entre elles par un élément de liaison, dont la longueur peut être réduite à l'aide d'un dispositif (25) d'entraînement.

8. Siège de véhicule suivant la revendication 7,
**caractérisé**
**en ce que** l'élément de liaison est un câble (22) Bowden formé d'un câble (26) intérieur et d'une gaine (23).

9. Siège de véhicule suivant la revendication 6,
**caractérisé**
**en ce que** la gaine (23) s'appuie sur la deuxième extrémité (19a) de l'un des éléments (13a, 14a) à ressort et l'extrémité d'un segment, dépassant de la gaine (23), du câble (26) intérieur est immobilisée à la deuxième extrémité (19a) de l'autre élément (13b, 14b) à ressort.

10. Siège de véhicule suivant la revendication 8 ou 9,
**caractérisé**
**en ce que** sur la face (27) arrière de la plaque (9) d'appui il y a une rainure (28) de réception, qui s'étend au moins sur une partie de la largeur de la plaque d'appui et dans laquelle le câble (26) intérieur du câble Bowden est guidé sensiblement sans jeu.

11. Siège de véhicule suivant la revendication 7,
**caractérisé**
**en ce que** l'élément de liaison est un manchon (44) de serrage, dont les extrémités (46) sont reliés aux ressorts (13, 14) de traction hélicoïdaux.

12. Siège de véhicule suivant la revendication 11,
**caractérisé**
**en ce que** au moins une unité constituée du manchon (44) de serrage, d'engrenages (57) et d'un moteur (53) électrique est disposée dans un carter (54) commun immobilisé sur la face (27) arrière de la plaque (9) d'appui.

13. Siège de véhicule suivant l'une des revendications précédentes,
**caractérisé**
**en ce qu'**un dispositif (25) d'entraînement pouvant être commandé séparément est associé à chaque élément (5a, 5b) de maintien.

14. Siège de véhicule suivant l'une des revendications précédentes,
**caractérisé**
**en ce qu'**une autre plaque, à savoir une plaque (8) de support, est reliée au bord supérieure de la plaque d'appui.

15. Siège de véhicule suivant la revendication 14,
**caractérisé**
**en ce que** la plaque (8) de support est immobilisée par des éléments à ressort sur les parties latérales du câble.

16. Siège de véhicule suivant la revendication 14 ou 15,
**caractérisé**
**en ce que** la plaque (8) de support est articulée à la plaque (9) d'appui.

17. Siège de véhicule suivant la revendication 16, 17 ou 18,
**caractérisé**
**en ce que** la surface (8) de support est souple dans la direction verticale.

18. Siège de véhicule suivant l'une des revendications précédentes,
**caractérisé**
**en ce que** sur la face (27) arrière de la plaque (9) d'appui et/ou de la plaque (8) de support est montée un ventilateur (43) dont l'ouverture de sortie traverse la plaque (8) de support ou la plaque (9) d'appui.
